# EUROPÄISCHE PATENTSCHRIFT

(11) **EP 4 113 082 B1**
(45) Veröffentlichungstag und Bekanntmachung des Hinweises auf die Patenterteilung: **21.08.2024**
(21) Anmeldenummer: 22169780.8
(22) Anmeldetag: 25.04.2022
(51) Int. Cl.: G01K 1/14, G01K 1/16, G01K 13/02

(54) **TEMPERATURSENSOR**
TEMPERATURE SENSOR
CAPTEUR DE TEMPÉRATURE

(30) Priorität: 28.06.2021 DE 102021206667
(43) Veröffentlichungstag der Anmeldung: 04.01.2023
(73) Patentinhaber: ContiTech Techno-Chemie GmbH, 61184 Karben (DE)
(72) Erfinder: Richards, Justin, 30165 Hannover (DE); Linzmaier, Markus, 30165 Hannover (DE); Kleiber, Arthur, 30165 Hannover (DE)
(74) Vertreter: Continental Corporation

(56) Entgegenhaltungen:
- EP-A1- 1 074 825
- WO-A1-2006/026833
- WO-A1-2010/088852

## Beschreibung

Die vorliegende Erfindung betrifft einen Temperatursensor gemäß dem Oberbegriff des Patentanspruchs 1, eine Medienführung mit einem derartigen Temperatursensor gemäß dem Patentanspruch 8, ein Fahrzeug mit einem derartigen Temperatursensor gemäß dem Patentanspruch 9, eine Maschine mit einem derartigen Temperatursensor gemäß dem Patentanspruch 10 sowie eine Anlage mit einem derartigen Temperatursensor gemäß dem Patentanspruch 11. Zum Transport bzw. zur Führung von Medien wie insbesondere von Fluiden ist die Verwendung von beispielsweise Schläuchen bekannt. Zu den Fluiden gehören neben Flüssigkeiten auch Gase oder pastöse Stoffe. Mehrere Schläuche können dabei untereinander über Schlauchkupplungen miteinander verbunden werden, welche jeweils an dem entsprechenden offenen Ende fest an dem jeweiligen Schlauch angeordnet sind. Über derartige Schlauchkupplungen können Schläuche ebenfalls mit Aggregaten verbunden werden, welche ihrerseits eine entsprechende Kupplung aufweisen.

In jedem Fall können derartige Schlauchkupplungen als sogenannte Schnellkupplungen, im Englischen als Quick Connector bezeichnet, ausgebildet sein, welche ein schnelles und einfaches Verbinden und Lösen ermöglichen können. Derartige Schlauchkupplungen können aus Metall aber auch aus Kunststoff, insbesondere als Spritzgussteile, ausgebildet sein.

Derzeit werden Temperatursensoren durch invasive Lösungen in Kunststoff-Spritzgussteile integriert. Diese Lösungen können aus zwei verschiedenen Teilen bestehen, bei denen eine Schlauchkupplung und die eingehausten Temperatursensoren beim Anwender auf das endgültige Teil montiert werden.

Andere Ansätze bestehen darin, den Temperatursensor beispielsweise als NTC-Thermistor (Negative Temperature Coefficient Thermistor) direkt in ein Spritzgussteil zu integrieren. Daher stellt das Gehäuse des Temperatursensors einen Anschluss der Schlauchkupplung dar, der innerhalb einer medienführenden Schlauchleitung montiert wird.

Nachteilig ist hierbei, dass die Spritzgussteile der Schlauchkupplungen für die Integration eines Temperatursensors individuell gestaltet werden müssen. Dies stellt einen zusätzlichen Aufwand dar. Insbesondere kann sich hierdurch die Teilevielfalt deutlich erhöhen, wenn unterschiedliche Temperatursensoren verwendet werden können sollen.

Nachteilig ist auch, dass dies die Verwendung neuer Materialien z. B. PA66 bei derartigen Schlauchkupplungen mit Temperatursensoren erschweren kann. Insbesondere sollten lediglich Materialien ohne Glasfaserverstärkung für derartige Anwendungen verwendet werden, da die Glasfasern die thermische Leitfähigkeit des Materials reduzieren und somit die Ansprechzeit und Genauigkeit des Temperatursensors verringern können. Entsprechend steht die Verwendung von Temperatursensoren im Widerspruch zur erhöhten Festigkeit derartiger Schlauchkupplungen, welche durch die Verwendung von glasfaserverstärktem Kunststoff erreicht werden kann.

Der vorliegenden Erfindung stellt sich somit die Aufgabe, derartige Schlauchkupplungen bzw. Schlauchleitungen mit Temperatursensoren zur Verfügung zu stellen, ohne die zuvor beschriebenen Nachteile aufzuweisen. Insbesondere sollen mehr unterschiedliche Materialien, insbesondere Kunststoffe, zur Herstellung der Schlauchkupplungen verwendet werden können als bisher bekannt. Zusätzlich oder alternativ soll eine nicht-invasive Integration von Temperatursensoren in Schlauchkupplungen bzw. in Schlauchleitungen ermöglicht werden. In jedem Fall soll dies möglichst einfach, schnell, montagefreundlich, bauraumsparend, kostengünstig, intuitiv umsetzbar und bzw. oder mit geringem Gewicht umgesetzt werden können. Zumindest soll eine Alternative zu bekannten derartigen Schlauchkupplungen bzw. Schlauchleitungen mit Temperatursensoren geschaffen werden.

Die WO 2006/026833 A1 beschreibt einen Temperaturmessfühler zur Montage in einem Rohr oder einer Leitung, durch das bzw. durch die ein Fluid fließt, wobei der Fühler Folgendes umfasst: einen Körper mit Kopplungsmitteln daran, um eine fluiddichte Kopplung des Rohrs oder der Leitung mit dem Körper zu ermöglichen; einen Fluiddurchgang in dem Körper, um zu ermöglichen, dass Fluid durch ihn zu oder von dem Rohr oder der Leitung fließt; ein Sondenrohr, das an seinem distalen Ende geschlossen ist, wobei das Sondenrohr mit dem Körper verbunden ist, so dass das distale Ende von den Kopplungsmitteln beabstandet ist; und ein Temperatursensorelement, das in thermischem Kontakt innerhalb des Sondenrohrs angebracht ist, wobei die Anordnung so ist, dass, wenn der Körper im Gebrauch durch die Kopplungsmittel mit dem Rohr oder der Leitung gekoppelt ist, sich das distale Ende des Sondenrohrs innerhalb des Rohrs oder der Leitung befindet.

Die EP 1 074 825 A1 beschreibt eine Schutzrohranordnung, die in einer Rohrleitung angeordnet ist, um die Temperatur des flüssigen Mediums in der Rohrleitung zu messen und die gemessene Temperatur an ein Messgerät zu übertragen. Ein Temperaturfühler wird in einem temperaturleitenden Rohr aufgenommen, das ein Schutzrohr bildet und eine Vielzahl von ringförmigen Rippen aufweist, die sich um dieses herum erstrecken. Nichtmetallische Elemente sind zwischen der Rohrleitung und dem temperaturübertragenden Rohr angeordnet, um das Thermoelement von Temperaturänderungen in der Umgebung der Metallrohrleitung zu isolieren, die zu einem Fehler in der von der Schutzrohranordnung gemessenen Temperatur des Durchflussmediums führen können.

Die WO 2010/088852 A1 beschreibt ein temperaturanzeigendes Verbindungsrohr umfassend ein Gehäuse, ein Wärmeübertragungselement, einen Dorn und eine Oberflächenabdeckung. In dem Gehäuse ist ein Wasserdurchlass vorgesehen. Ein Ende des Wärmeübertragungselements liegt im Wasserdurchgang, das andere Ende ist mit einem spiralförmigen Bimetallstreifen verbunden. Das mittlere Ende des Spiralbimetalls ist mit dem Wärmeübertragungselement verbunden, das andere Ende ist mit einem Zeiger versehen. Die Einstellung der Wasserdurchflussmenge erfolgt durch Drehen der Oberflächenabdeckung. Im Vergleich zu den bisherigen digitalen Anzeigethermometern wird zur Temperaturanzeige die taktile Temperaturverzerrung eines Bimetallstreifens verwendet, wodurch die Rohrverbindung relativ kostengünstig und einfach aufgebaut ist.

Die Aufgabe wird erfindungsgemäß durch einen Temperatursensor mit den Merkmalen gemäß Patentanspruch 1, gelöst. Vorteilhafte Weiterbildungen sind in den Unteransprüchen beschrieben.

Somit betrifft die vorliegende Erfindung einen Temperatursensor mit wenigstens einem Sensorelement, welches ausgebildet ist, eine Temperatur eines Mediums innerhalb einer Medienführung sensorisch zu erfassen. Eine derartige Medienführung kann insbesondere eine Schlauchleitung oder eine Rohrleitung sein, welche insbesondere von zwei miteinander verbundenen Schläuchen bzw. Rohren oder von einem Schlauch bzw. Rohr gebildet werden kann, welcher bzw. welches mit einem Aggregat verbunden ist.

Der erfindungsgemäße Temperatursensor umfasst wenigstens einen Sensorfühler mit einem, vorzugsweise zylindrischen, Kontaktabschnitt, welcher ausgebildet ist, innerhalb eines Durchflusses der Medienführung angeordnet zu werden, wobei der Kontaktabschnitt des Sensorfühlers ausgebildet ist, die Temperatur des Mediums aufzunehmen, und wobei der Sensorfühler ausgebildet ist, die Temperatur des Mediums zum Sensorelement zu leiten. Mit anderen Worten ist das Sensorelement, welches die sensorische Erfassung einer Temperatur ausführen und einen Wert, welcher die erfasste Temperatur repräsentiert, ausgeben kann, nicht in direktem bzw. unmittelbaren Kontakt zum Medium angeordnet sondern hierzu beabstandet, insbesondere außerhalb der Medienführung bzw. außen an der Medienführung anliegend. Insbesondere sind das Sensorelement und der Sensorfühler getrennt voneinander ausgebildet und lediglich miteinander in einem temperaturleitfähigen Kontakt gebracht.

Der vorliegenden Erfindung liegt dabei der Gedanke zugrunde, dass bisher, wie eingangs beschrieben, die Temperatursensoren derartiger Medienführungen in Kupplungen integriert werden, was zu den entsprechenden Nachteilen führen kann. Erfindungsgemäß wird daher stattdessen ein derartiger Temperatursensor als separates Bauteil, d.h. unabhängig von der Medienführung bzw. dessen Kupplung, Schlauch oder Rohr ausgebildet, so dass der erfindungsgemäße Temperatursensor mit verschiedenen Medienführungen bzw. dessen Kupplung, Schlauch oder Rohr verwendet werden kann.

Um dabei dennoch die Temperatur des Mediums im Inneren der Medienführung erfassen zu können, ist das Sensorelement des Temperatursensors mittels des Sensorfühlers temperaturleitend mit dem Inneren der Medienführung verbunden. Der Sensorfühler weist daher ein Material auf bzw. besteht aus einem Material, welches eine ausreichend hohe thermische Leitfähigkeit besitzt, um sich der Temperatur des Mediums anzugleichen und somit die Temperatur des Mediums durch sich hindurch zum Sensorelement zu leiten. Hierzu kann der Sensorfühler insbesondere aus Metall ausgebildet sein. Der entsprechende Abschnitt dessen Sensorfühlers, welcher im direkten Kontakt mit dem Medium steht, kann daher als Kontaktabschnitt bezeichnet werden. Den Kontaktabschnitt dabei zylindrisch auszubilden kann die Kontaktfläche vergrößern und damit die Temperaturleitung begünstigen.

Mit anderen Worten betrifft die vorliegende Erfindung einen Temperatursensor, der an oder in einem Anschluss eines Medien- bzw. Flüssigkeitssystems angebracht werden kann, ohne das komplette System zu öffnen. Das Sensorelement dieses Temperatursensors ist mit einem wärmeleitenden Material, z.B. mit einem Metallstück, als Temperaturfühler verbunden, welches temperaturleitfähig direkt mit dem Fluid verbunden ist und somit eine direkte Temperaturinformation über das Innere des Fluidsystems liefern kann.

Die Vorteile können darin gesehen werden, dass die erfindungsgemäße Lösung beispielsweise über eine Metallklammer als Sensorfühler, die nach dem Spritzgussprozess installiert wird, an jedem Schnellanschluss oder an jedem Spritzgussteil verwendet werden kann, das derzeit im Fluidleitungssystem verfügbar ist, so dass jedes für Fluidleitungsanwendungen verfügbare Designteil verwendet werden kann. Die Metallklammer kann insbesondere das gleiche Design wie der Verbindungsabschnitt der Kupplung der Medienführung haben, so dass der erfindungsgemäße Temperatursensor montiert werden kann, ohne die Konstruktion bzw. das Design der Kupplung verändern und anpassen zu müssen.

Bei Bedarf kann es möglich sein, eine Nut als Aufnahme in den Verbindungsabschnitt der Kupplung der Medienführung einzubringen, um eine glatte Oberfläche in diesem Bereich zu haben, auf welcher der Sensorfühler bzw. dessen Halterungsabschnitt aufliegen kann. In diesem Fall kann der Temperatursensor auch im Spritzgießwerkzeug montiert und so in Kombination mit dem Temperatursensor ein Umspritzungsschritt durchgeführt werden. Die Verbindung kann auch durch einen Metallstift realisiert werden, der während des Spritzgießprozesses eingeführt wird. Dazu kann das Spritzgießwerkzeug mit einem austauschbaren Teil leicht angepasst werden, um diesen Metalleinsatz zu fixieren.

Gemäß einem Aspekt der Erfindung weist der Sensorfühler einen Verbindungsabschnitt auf, welcher den Kontaktabschnitt des Sensorfühlers temperaturleitfähig mit dem Sensorelement verbindet, wobei der Verbindungsabschnitt des Sensorfühlers ausgebildet ist, außerhalb des Durchflusses der Medienführung angeordnet zu werden. Dies kann eine Möglichkeit der Umsetzung zuvor beschriebener Aspekte der Erfindung ermöglichen. Insbesondere kann auf diese Art und Weise Sensorelement außerhalb des Durchflusses angeordnet werden und dennoch die Temperatur innerhalb des Durchflusses sensorisch über den Sensorfühler erfassen. Erfindungsgemäß weist der Sensorfühler einen Halterungsabschnitt auf, welcher ausgebildet ist, den Temperatursensor zumindest anteilig auf und bzw. oder an der Medienführung zu halten. Hierdurch kann, vom Halterungsabschnitt in Kombination mit dem Kontaktabschnitt, eine Montage des Temperatursensors an der Medienführung erfolgen. Dies erfolgt kraftschlüssig, formschlüssig oder mittels einer Kombination hiervon.

Erfindungsgemäß sind der Halterungsabschnitt und der Kontaktabschnitt des Sensorfühlers ausgebildet, eine Wandung der Medienführung zumindest abschnittsweise, vorzugsweise parallel zueinander in der Längsrichtung verlaufend U-förmig, zu umgreifen, um den Temperatursensor kraft- und bzw. oder formschlüssig auf oder an der Medienführung zu halten. Dies kann zum einen eine besonders wirkungsvolle Temperaturleitung vom Medium im Durchfluss über den Sensorfühler nach außen ermöglichen. Gleichzeitig kann hierdurch zum anderen ein Halt des Temperatursensors wie zuvor beschrieben bewirkt werden.

Gemäß einem weiteren Aspekt der Erfindung weist der Halterungsabschnitt wenigstens eine Konturanpassung, vorzugsweise eine Mehrzahl von Konturanpassungen, auf, welche der Kontur der Medienführung, vorzugsweise einer Aufnahme der Medienführung, angepasst ist. Eine derartige Konturanpassung kann beispielsweise durch radiale Erhebungen und bzw. oder durch radiale Vertiefungen des Halterungsabschnitts umgesetzt werden, welche auch als Sicken bezeichnet werden können. Hierdurch kann der Halterungsabschnitt besser der Kontur der jeweiligen Medienführung bzw. dessen Aufnahme angepasst werden. Hierdurch kann eine Behinderung der Verbindung von Medienführung bzw. dessen Aufnahme mit einem Schlauch möglichst geringgehalten werden und somit die Dichtigkeit an dieser Stelle gewahrt bleiben. Gemäß einem weiteren Aspekt der Erfindung weist der Temperatursensor wenigstens einen Sensoranschluss auf, welcher ausgebildet ist, die erfasste Temperatur drahtgebunden und bzw. oder drahtlos nach außerhalb des Temperatursensors zu übergeben. Dies kann es ermöglichen, die sensorisch erfassten Werte nach außerhalb zur Verfügung zu stellen.

Gemäß einem weiteren Aspekt der Erfindung ist der Temperatursensor ausgebildet, an einer Kupplung der Medienführung verwendet zu werden. Dies kann die Umsetzung begünstigen, da die Kupplung der Medienführung einfacher zu handhaben bzw. mit dem Temperatursensor auszurüsten sein kann.

Gemäß einem weiteren Aspekt der Erfindung weist der Temperatursensor wenigstens eine Halterung auf, welche ausgebildet ist, den Temperatursensor an einer Medienführung, vorzugsweise an einer Kupplung der Medienführung, gehalten zu werden. Dies kann insbesondere kraftschlüssig erfolgen, beispielsweise durch ein ringförmiges Umgreifen. In jedem Fall kann hierdurch die Anordnung des Temperatursensors an der Medienführung bzw. an dessen Kupplung vereinfacht sowie der Halt des Temperatursensors verbessert werden.

Ein weiterer Aspekt der Erfindung betrifft auch eine Medienführung, vorzugsweise eine Kupplung, mit wenigstens einem Temperatursensor wie zuvor beschrieben, wobei die Medienführung vorzugsweise eine Aufnahme, vorzugsweise als Vertiefung eines Verbindungsabschnitts, vorzugsweise in Längsrichtung, aufweist, welche einen Halterungsabschnitt des Temperatursensors aufnimmt. Hierdurch kann eine Medienführung und insbesondere eine Kupplung geschaffen werden, um die zuvor beschriebenen Eigenschaften und Vorteile eines erfindungsgemäßen Temperatursensors nutzen und umsetzen zu können. Dabei vorzugsweise eine Aufnahme für den Temperatursensor bzw. für dessen Verbindungsabschnitt seitens der Medienführung bzw. der Kupplung vorzusehen kann die Montage bzw. Verwendung vereinfachen.

Ein weiterer Aspekt der Erfindung betrifft auch ein Fahrzeug vorzugsweise ein Straßenfahrzeug, mit wenigstens einer Medienführung wie zuvor beschrieben. Hierdurch kann ein Fahrzeug und insbesondere ein Straßenfahrzeug geschaffen werden, um die zuvor beschriebenen Eigenschaften und Vorteile einer erfindungsgemäßen Medienführung nutzen und umsetzen zu können.

Ein weiterer Aspekt der Erfindung betrifft auch eine Maschine mit wenigstens einer Medienführung wie zuvor beschrieben. Hierdurch kann eine Maschine geschaffen werden, um die zuvor beschriebenen Eigenschaften und Vorteile einer erfindungsgemäßen Medienführung nutzen und umsetzen zu können.

Ein weiterer Aspekt der Erfindung betrifft auch eine Anlage mit wenigstens einer Medienführung wie zuvor beschrieben. Hierdurch kann eine Anlage geschaffen werden, um die zuvor beschriebenen Eigenschaften und Vorteile einer erfindungsgemäßen Medienführung nutzen und umsetzen zu können.

Ein Ausführungsbeispiel und weitere Vorteile der Erfindung werden nachstehend im Zusammenhang mit den folgenden Figuren erläutert. Darin zeigt:
- Fig. 1: eine schematische Darstellung einer erfindungsgemäßen Kupplung mit einem erfindungsgemäßen Temperatursensor; und
- Fig. 2: eine schematische Schnittdarstellung einer erfindungsgemäßen Medienführung mit dem erfindungsgemäßen Temperatursensor.

Die Beschreibung der o.g. Figuren erfolgt in zylindrischen Koordinaten mit einer Längsrichtung X, einer zur Längsrichtung X senkrecht ausgerichteten radialen Richtung R sowie einer um die Längsrichtung X umlaufenden Umfangsrichtung U. Die Längsrichtung X, die radiale Richtung R und die Umfangsrichtung U können gemeinsam auch als Raumrichtungen X, R, U bzw. als zylindrische Raumrichtungen X, R, U bezeichnet werden.

Eine erfindungsgemäße Medienführung 1, 2 wird am Beispiel einer Schlauchleitung 1, 2 betrachtet, welche jedoch auch beispielsweise eine Rohrleitung 1, 2 sein könnte. Die Schlauchleitung 1, 2 weist eine Kupplung 1 auf, welche entsprechend als Schlauchkupplung 1 bezeichnet werden kann und beispielsweise als Schnellkupplung 1 ausgeführt ist. Die Schlauchleitung 1, 2 weist ferner einen Schlauch 2 auf, wobei auch ein Rohr 2 verwendet werden könnte.

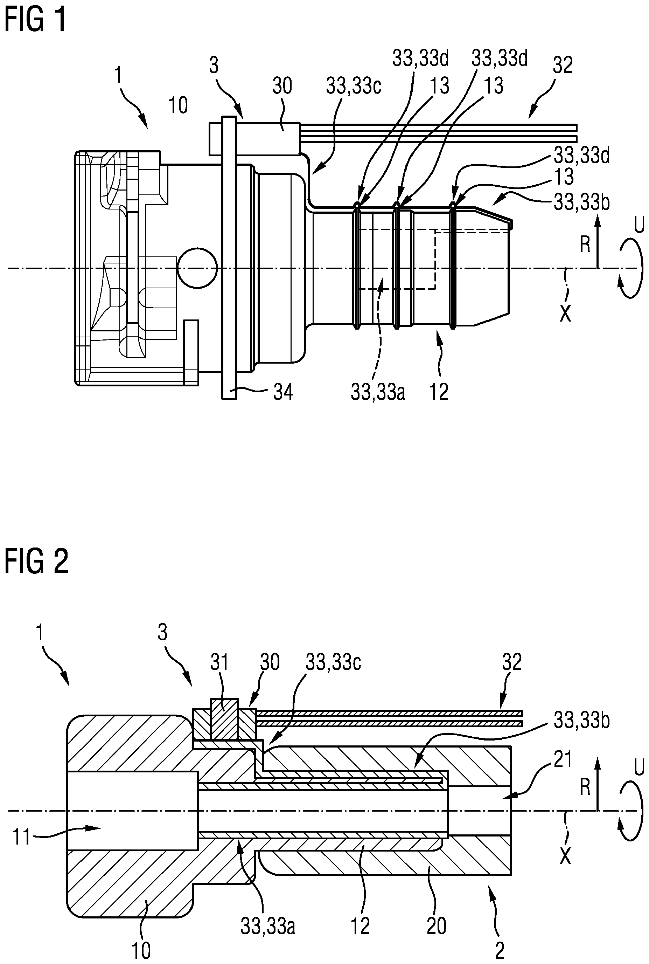

Die Schlauchkupplung 1 weist einen Kopplungskörper 10 auf, welcher einstückig, d. h. integral, als Spritzgussteil aus Kunststoff hergestellt ist. In der Längsrichtung X erstreckt sich ein zylindrischer Durchfluss 11 durch den Kopplungskörper 10 hindurch. In der Darstellung der Figuren 1 und 2 links ist der Kopplungskörper 10 ausgebildet, mit einer korrespondierenden Kupplung eines Aggregats (nicht dargestellt) verbunden zu werden. Entlang der Längsrichtung X gegenüberliegend, d. h. in der Darstellung der Figuren 1 und 2 rechts, bildet der Kopplungskörper eine Wandung 12 aus, welche in der radialen Richtung R vergleichsweise dünnwandig ist, sodass hier von außen der Schlauch 2 aufgenommen werden kann. Dieser Abschnitt des Kupplungskörpers 10 kann daher auch als Verbindungsabschnitt 12 bezeichnet werden. Der Verbindungsabschnitt 12 weist außen liegend eine Zickzack-Kontur auf, siehe Figur 1, um den Halt eines aufgeschobenen Schlauches 2 zu verbessern. In der Längsrichtung X ist ebenfalls außen liegend eine längliche und flache Aufnahme 13 in die Zickzack-Kontur eingebracht.

Der Schlauch 2 besteht im Wesentlichen aus einem elastomeren Material und ist somit flexibel ausgebildet. Der Schlauch 2 wird im Wesentlichen von einer zylindrischen Wandung 20 gebildet, welche auch als Schlauchwand 20 bezeichnet werden kann. Im Falle eines Rohres 2 könnte die Wandung 20 auch als Rohrwand 20 bezeichnet werden. Von der Schlauchwand 20 wird ein zylindrischer Durchfluss 21 umschlossen. Durch den Durchfluss 21 des Schlauches 2 und durch den Durchfluss 11 der Schlauchkupplung 1 kann ein Medium wie beispielsweise ein Fluid strömen.

Die erfindungsgemäße Schlauchleitung 1, 2 ist mit einem erfindungsgemäßen Temperatursensor 3 ausgestattet. Der Temperatursensor 3 ist außenliegend an der Schlauchkupplung 1 feststehend angeordnet. Der Temperatursensor 3 weist ein Sensorgehäuse 30 auf, welches ein Sensorelement 31 in Form eines NTC-Thermistors 31 umgibt und schützt. Das Sensorelement 31 ist ausgebildet, eine Temperatur sensorisch zu erfassen und entsprechende Sensorwerte zu erzeugen. Über einen Sensoranschluss 32, welcher als Sensorstecker 32 oder als Sensorantenne 32 ausgebildet sein kann, können die erfassten Sensorwerte drahtgebunden oder drahtlos vom Temperatursensor 3 übertragen bzw. ausgesendet werden.

Damit das Sensorelement 31 die Temperatur des Mediums im Durchfluss 11 der Schlauchkupplung 1 sensorisch erfassen kann, erstreckt sich ein metallischer Sensorfühler 33 als Temperaturleiter 33 von dem Sensorelement 31 bis in den Durchfluss 11 der Schlauchkupplung 1 hinein. Der Sensorfühler 33 geht dabei einstückig ausgebildet von einem Verbindungsabschnitt 33c, welcher in berührendem Kontakt mit dem Sensorelement 31 steht, in einen Halterungsabschnitt 33b über und endet mit einem Kontaktabschnitt 33a innerhalb des Durchflusses 11 der Schlauchkupplung 1. Dabei umgreifen der Halterungsabschnitt 33b und der Kontaktabschnitt 33a den Verbindungsabschnitt 12 des Kupplungskörpers 10 U-förmig, was je nach Dimensionierung des radialen Abstandes formschlüssig oder kraft- und formschlüssig erfolgen kann. Der Halterungsabschnitt 33b weist Konturanpassungen 33d in Form an Erhebungen bzw. Sicken auf, sodass sich der Halterungsabschnitt 33b genau der Zickzack-Kontur der Aufnahme 13 des Verbindungsabschnitts 12 des Kupplungskörpers 10 anpasst. Der Halterungsabschnitt 33b des Sensorfühlers 33 verläuft dabei in der Aufnahme 13 des Verbindungsabschnitts 12 des Kupplungskörpers 10.

Der Kontaktabschnitt 33a ist zylindrisch ausgebildet und erstreckt sich in der Längsrichtung X über den gesamten Verbindungsabschnitt 12 des Kupplungskörpers 10, sodass ein möglichst großflächiger Kontakt mit dem strömenden Medium erreicht werden kann. Auf diese Art und Weise kann sich der Kontaktabschnitt 33a des Sensorfühlers 33 der Temperatur des strömenden Mediums anpassen und diese über den Halterungsabschnitt 33b hinweg bis zum Kontaktabschnitt 33a leiten, wo die Temperatur des strömenden Mediums dann vom Sensorelement 31 sensorisch erfasst werden kann.

Hierdurch kann die Anordnung des Temperatursensors 3 vollständig außerhalb des Kupplungskörpers 10 der Schlauchkupplung 1 erfolgen. Insbesondere kann das Sensorelement 31 außerhalb des Kupplungskörpers 10 der Schlauchkupplung 1 angeordnet und dort mittels einer Halterung 34 gehalten werden. Dennoch kann eine sensorische Erfassung der Temperatur des strömenden Mediums innerhalb der Schlauchkupplung 1 erfolgen.

Insbesondere kann der Temperatursensor 3 sehr einfach bei verschiedenen Schlauchkupplungen 1 verwendet bzw. durch einfache Veränderungen lediglich des Sensorfühlers 33 an verschiedene Schlauchkupplungen 1 angepasst werden. Dies kann den Aufwand und die Kosten der Umsetzung bzw. Verwendung eines erfindungsgemäßen Temperatursensors 3 gering halten und gleichzeitig die Anwendungsmöglichkeiten erhöhen.

### Bezugszeichenliste

- R: radiale Richtung
- U: Umfangsrichtung
- X: Längsrichtung

- 1, 2: Medienführung; Schlauchleitung; Rohrleitung
- 1: Kupplung; Schlauchkupplung; Schnellkupplung
- 10: Kupplungskörper
- 11: Durchfluss
- 12: Wandung des Kupplungskörpers 10; Verbindungsabschnitt
- 13: Aufnahme

- 2: Schlauch; Rohr
- 20: Wandung des Schlauches 2; Schlauchwand; Rohrwand
- 21: Durchfluss

- 3: Temperatursensor
- 30: Sensorgehäuse
- 31: Sensorelement; NTC-Thermistor
- 32: Sensoranschluss; Sensorstecker; Sensorantenne
- 33: Sensorfühler; Temperaturleiter
- 33a: Kontaktabschnitt
- 33b: Halterungsabschnitt
- 33c: Verbindungsabschnitt
- 33d: Konturanpassungen; Sicken
- 34: Halterung

## Patentansprüche

1. Temperatursensor (3),
mit wenigstens einem Sensorelement (31), welches ausgebildet ist, eine Temperatur eines Mediums innerhalb einer Medienführung (1, 2) sensorisch zu erfassen, und
mit wenigstens einem Sensorfühler (33) mit einem, vorzugsweise zylindrischen, Kontaktabschnitt (33a), welcher ausgebildet ist, innerhalb eines Durchflusses (11, 21) der Medienführung (1, 2) angeordnet zu werden, wobei der Kontaktabschnitt (33a) des Sensorfühlers (33) ausgebildet ist, die Temperatur des Mediums aufzunehmen,
wobei der Sensorfühler (33) ausgebildet ist, die Temperatur des Mediums zum Sensorelement (31) zu leiten, und
wobei der Sensorfühler (33) einen Halterungsabschnitt (33b) aufweist, welcher ausgebildet ist, den Temperatursensor (3) zumindest anteilig auf und/oder an der Medienführung (1, 2) zu halten,
**dadurch gekennzeichnet, dass**
der Halterungsabschnitt (33b) und der Kontaktabschnitt (33a) des Sensorfühlers (33) ausgebildet sind, eine Wandung (12, 20) der Medienführung (1, 2) zumindest abschnittsweise zu umgreifen, um den Temperatursensor (3) kraft- und/oder formschlüssig auf oder an der Medienführung (1, 2) zu halten.

2. Temperatursensor (3) nach Anspruch 1, **dadurch gekennzeichnet, dass** der Sensorfühler (33) einen Verbindungsabschnitt (33c) aufweist, welcher den Kontaktabschnitt (33a) des Sensorfühlers (33) temperaturleitfähig mit dem Sensorelement (31) verbindet,
wobei der Verbindungsabschnitt (33c) des Sensorfühlers (33) ausgebildet ist, außerhalb des Durchflusses (11, 21) der Medienführung (1, 2) angeordnet zu werden.

3. Temperatursensor (3) nach Anspruch 1 oder 2, **dadurch gekennzeichnet, dass**
der Halterungsabschnitt (33b) und der Kontaktabschnitt (33a) des Sensorfühlers (33) ausgebildet sind, die Wandung (12, 20) der Medienführung (1, 2) zumindest abschnittsweise parallel zueinander in der Längsrichtung verlaufend U-förmig zu umgreifen, um den Temperatursensor (3) kraft- und/oder formschlüssig auf oder an der Medienführung (1, 2) zu halten.

4. Temperatursensor (3) nach einem der vorangehenden Ansprüche, **dadurch gekennzeichnet, dass**
der Halterungsabschnitt (33b) wenigstens eine Konturanpassung (33d), vorzugsweise eine Mehrzahl von Konturanpassungen (33d), aufweist, welche der Kontur der Medienführung (1, 2), vorzugsweise einer Aufnahme (13) der Medienführung (1, 2), angepasst ist.

5. Temperatursensor (3) nach einem der vorangehenden Ansprüche, **gekennzeichnet durch**
wenigstens einen Sensoranschluss (32), welcher ausgebildet ist, die erfasste Temperatur drahtgebunden und/oder drahtlos nach außerhalb des Temperatursensors (3) zu übergeben.

6. Temperatursensor (3) nach einem der vorangehenden Ansprüche, **dadurch gekennzeichnet, dass**
der Temperatursensor (3) ausgebildet ist, an einer Kupplung (1) der Medienführung (1, 2) verwendet zu werden.

7. Temperatursensor (3) nach einem der vorangehenden Ansprüche, **gekennzeichnet durch**
wenigstens eine Halterung (34), welche ausgebildet ist, den Temperatursensor (3) an einer Medienführung (1, 2), vorzugsweise an einer Kupplung (1) der Medienführung (1, 2), gehalten zu werden.

8. Medienführung (1, 2), vorzugsweise Kupplung (1), mit wenigstens einem Temperatursensor (3) nach einem der vorangehenden Ansprüche,
wobei die Medienführung (1, 2), vorzugsweise eine Aufnahme (13), vorzugsweise als Vertiefung eines Verbindungsabschnitts (12), vorzugsweise in Längsrichtung (X), aufweist, welche einen Halterungsabschnitt (33b) des Temperatursensors (3) aufnimmt.

9. Fahrzeug vorzugsweise Straßenfahrzeug, mit wenigstens einer Medienführung (1, 2), vorzugsweise Kupplung (1), nach Anspruch 8.

10. Maschine mit wenigstens einer Medienführung (1, 2), vorzugsweise Kupplung (1), nach Anspruch 8.

11. Anlage mit wenigstens einer Medienführung (1, 2), vorzugsweise Kupplung (1), nach Anspruch 8.

## Claims

1. Temperature sensor (3),
with at least one sensor element (31), which is designed to detect by sensor action a temperature of a medium within a media conduit (1, 2), and
with at least one sensor probe (33) with a, preferably cylindrical, contact portion (33a), which is designed to be arranged within a flow passage (11, 21) of the media conduit (1, 2), the contact portion (33a) of the sensor probe (33) being designed to record the temperature of the medium,
the sensor probe (33) being designed to conduct the temperature of the medium to the sensor element (31), and
the sensor probe (33) having a mounting portion (33b), which is designed to hold the temperature sensor (3) at least in part on and/or against the media conduit (1, 2),
**characterized in that**
the mounting portion (33b) and the contact portion (33a) of the sensor probe (33) are designed to reach at least to some extent around a wall (12, 20) of the media conduit (1, 2) in order to hold the temperature sensor (3) on or against the media conduit (1, 2) with a force fit and/or a form fit.

2. Temperature sensor (3) according to Claim 1, **characterized in that** the sensor probe (33) has a connecting portion (33c), which connects the contact portion (33a) of the sensor probe (33) temperature-conductively to the sensor element (31),
the connecting portion (33c) of the sensor probe (33) being designed to be arranged outside the flow passage (11, 21) of the media conduit (1, 2).

3. Temperature sensor (3) according to Claim 1 or 2, **characterized in that** the mounting portion (33b) and the contact portion (33a) of the sensor probe (33) are designed to reach at least to some extent around the wall (12, 20) of the media conduit (1, 2) in a U-shaped manner while running parallel to one another in the longitudinal direction in order to hold the temperature sensor (3) on or against the media conduit (1, 2) with a force fit and/or a form fit.

4. Temperature sensor (3) according to one of the preceding claims, **characterized in that**
the mounting portion (33b) has at least one contour adaptation (33d), preferably a plurality of contour adaptations (33d), which is/are adapted to the contour of the media conduit (1, 2), preferably a receptacle (13) of the media conduit (1, 2).

5. Temperature sensor (3) according to one of the preceding claims, **characterized by**
at least one sensor connection (32), which is designed to transmit the detected temperature in a wire-bound and/or wireless manner to outside the temperature sensor (3).

6. Temperature sensor (3) according to one of the preceding claims, **characterized in that**
the temperature sensor (3) is designed to be used on a coupling (1) of the media conduit (1, 2).

7. Temperature sensor (3) according to one of the preceding claims, **characterized by**
at least one mount (34), which is designed to hold the temperature sensor (3) against a media conduit (1 2), preferably against a coupling (1) of the media conduit (1, 2).

8. Media conduit (1, 2), preferably a coupling (1), with at least one temperature sensor (3) according to one of the preceding claims, the media conduit (1, 2) preferably having a receptacle (13), preferably as a depression of a connecting portion (12), preferably in the longitudinal direction (X), which receives a mounting portion (33b) of the temperature sensor (3).

9. Vehicle, preferably a road vehicle, with at least one media conduit (1, 2), preferably a coupling (1), according to Claim 8.

10. Machine with at least one media conduit (1 2), preferably a coupling (1), according to Claim 8.

11. Installation with at least one media conduit (1, 2), preferably a coupling (1), according to Claim 8.

## Revendications

1. Capteur de température (3),
comprenant au moins un élément capteur (31), lequel est configuré pour acquérir par détection une température d'un fluide à l'intérieur d'un guide de fluide (1, 2), et comprenant au moins une sonde de capteur (33) pourvue d'une portion de contact (33a), de préférence cylindrique, laquelle est configurée pour être disposée à l'intérieur d'un écoulement (11, 21) du guide de fluide (1, 2), la portion de contact (33a) de la sonde de capteur (33) étant configurée pour enregistrer la température du fluide,
la sonde de capteur (33) étant conçue pour conduire la température du fluide à l'élément capteur (31), et
la sonde de capteur (33) possédant une portion de maintien (33b), laquelle est configurée pour maintenir le capteur de température (3) au moins en partie sur et/ou au niveau du guide de fluide (1, 2),
**caractérisé en ce que**
la portion de maintien (33b) et la portion de contact (33a) de la sonde de capteur (33) sont configurées pour entourer au moins par portions une paroi (12, 20) du guide de fluide (1, 2), afin de maintenir le capteur de température (3) en liaison par adhérence et/ou par complémentarité de formes sur ou contre le guide de fluide (1, 2).

2. Capteur de température (3) selon la revendication 1, **caractérisé en ce que** la sonde de capteur (33) possède une portion de liaison (33c), laquelle relie avec conduction de température la portion de contact (33a) de la sonde de capteur (33) à l'élément capteur (31),
la portion de liaison (33c) de la sonde de capteur (33) étant configurée pour être disposée à l'extérieur de l'écoulement (11, 21) du guide de fluide (1, 2).

3. Capteur de température (3) selon la revendication 1 ou 2, **caractérisé en ce que**
la portion de maintien (33b) et la portion de contact (33a) de la sonde de capteur (33) sont configurées pour entourer au moins par portions la paroi (12, 20) du guide de fluide (1, 2) en forme de U parallèlement l'une à l'autre en suivant un tracé dans le sens de la longueur, afin de maintenir le capteur de température (3) en liaison par adhérence et/ou par complémentarité de formes sur ou contre le guide de fluide (1, 2).

4. Capteur de température (3) selon l'une des revendications précédentes, **caractérisé en ce que**
la portion de maintien (33b) possède au moins une adaptation de contour (33d), de préférence une pluralité d'adaptations de contour (33d), qui est adaptée au contour du guide de fluide (1, 2), de préférence à un logement (13) du guide de fluide (1, 2).

5. Capteur de température (3) selon l'une des revendications précédentes, **caractérisé par**
au moins un raccordement de capteur (32), lequel est configuré pour transmettre la température acquise de manière filaire et/ou sans fil vers l'extérieur du capteur de température (3).

6. Capteur de température (3) selon l'une des revendications précédentes, **caractérisé en ce que**
le capteur de température (3) est configuré pour être utilisé au niveau d'un coupleur (1) du guide de fluide (1, 2).

7. Capteur de température (3) selon l'une des revendications précédentes, **caractérisé par**
au moins un élément de maintien (34), lequel est configuré pour maintenir le capteur de température (3) au niveau d'un guide de fluide (1, 2), de préférence au niveau d'un coupleur (1) du guide de fluide (1, 2).

8. Guide de fluide (1, 2), de préférence coupleur (1), comprenant au moins un capteur de température (3) selon l'une des revendications précédentes, le guide de fluide (1, 2) possédant, de préférence, un logement (13), de préférence sous la forme d'un renfoncement d'une portion de liaison (12), de préférence dans la direction longitudinale (X), lequel accueille une portion de maintien (33b) du capteur de température (3).

9. Véhicule, de préférence véhicule routier, comprenant au moins un guide de fluide (1, 2), de préférence un coupleur (1), selon la revendication 8.

10. Machine comprenant au moins un guide de fluide (1, 2), de préférence un coupleur (1), selon la revendication 8.

11. Système comprenant au moins un guide de fluide (1, 2), de préférence un coupleur (1), selon la revendication 8.
